# EUROPEAN PATENT SPECIFICATION

(11) **EP 3 296 638 B1**
(45) Date of publication and mention of the grant of the patent: **19.02.2020**
(21) Application number: 16189669.1
(22) Date of filing: 20.09.2016
(51) Int. Cl.: F23R 3/28, F23R 3/34

(54) **BURNER ASSEMBLY AND METHOD FOR A BURNER OF A GAS TURBINE**
BRENNERANORDNUNG UND VERFAHREN FÜR EINEN BRENNER EINER GASTURBINE
BRÛLEUR COMPLET ET PROCÉDÉ POUR BRÛLEUR D'UNE TURBINE À GAZ

(43) Date of publication of application: 21.03.2018
(73) Proprietor: General Electric Technology GmbH, 5400 Baden (CH)
(72) Inventor: IMFELD, Jost, 5400 Baden (CH); MARKOVIC, Alen, 47000 Karlovac (HR); BIZIC, Igor, 5242 Birr (CH); DRUZAK, Vedran, 47000 Karlovac (HR); RUGGIERI, Giancarlo, 5400 Baden (CH); DE JONGE, Jeffrey Alan, 5242 Birr (CH)
(74) Representative: BRP Renaud & Partner mbB Rechtsanwälte Patentanwälte Steuerberater

(56) References cited:
- US-A- 3 273 343
- US-A- 4 466 240
- US-A1- 2007 227 157

## Description

### TECHNICAL FIELD

The present invention generally relates to the field of combustion technology of gas turbines.

### BACKGROUND

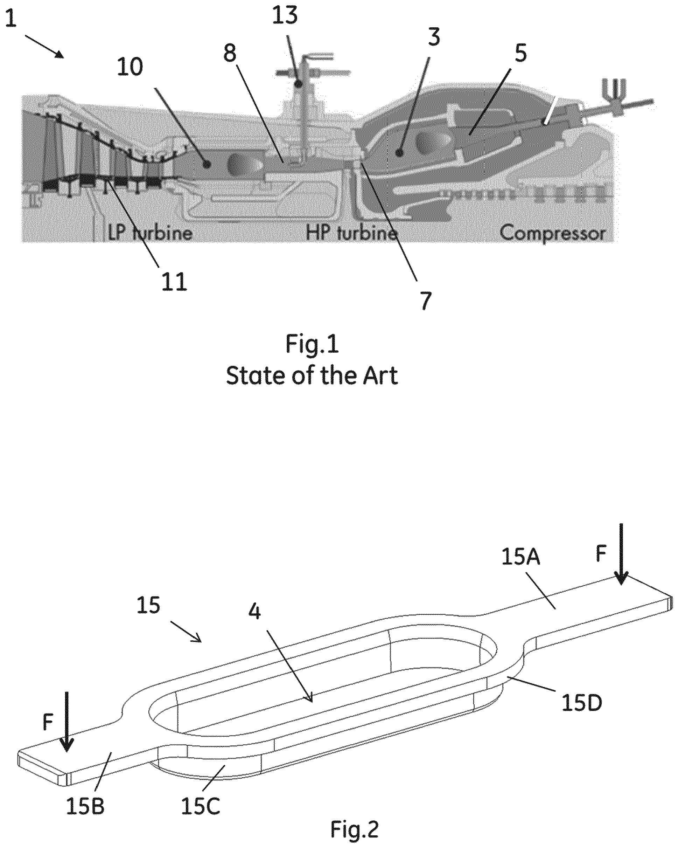

It is well known that in a sequential combustion gas turbine (1), described for example in EP0620362 and shown in Fig. 1, a first fuel/air mixture is burned in a EV (Environmental) combustion chamber (3) by an EV burner (5) and then expands in a high pressure turbine (7), see Fig.1. Thereafter, the partly expanded hot mixture from the first turbine (7) is fed in a SEV (Sequential Environmental) burner (8); then, it is burnt in a SEV combustion chamber (10) and finally expands through a second low pressure turbine (11).

A fuel lance (13) is provided directly in the hot gas path flowing in the SEV burner (8) for the fuel enrichment of the partly expanded hot gases entering in this burner (8) .

An EV lance, not shown in the Fig. 1, may be present in the EV burner (5), depending on the type of combustion.

Typically, both the EV and SEV combustion chambers (3; 10) have an annular arrangement fitted with a plurality of respective EV and SEV burners.

The sequential combustion is able to increase the efficiency of the gas turbine process cycle without raising the turbine inlet temperature.

Furthermore, the exhaust temperature after the second low-pressure turbine can be maintained at up to 600°-700°C over a wide part-load operating range with ideal conditions for the subsequent water steam cycle.

It is well known that the SEV fuel lance (13) needs to be mounted on the SEV burner (8) with some millimetres of clearance (usually about tenth of millimetres) for assembly purpose. Thus, vibrations may occur during the working phase of the turbine creating wearing and increasing cold air leakages between the burner and the lance, strongly impacting the operation and the emissions of the engine.

Furthermore, these leakages can be increased by creep deformation or deformations due to temperature differences between the burner and the lance during the working phase.

A disadvantage is that the leakages can locally decrease the working temperature in the SEV burner by as much as 100°C, making it very difficult an accurately control combustion parameters using a typical set up of the control system.

Another disadvantage is that the leakages can decrease the combustion temperature, detrimentally impacting the CO or the NOx emission of the turbine.

Typically, the above mentioned disadvantages are common also for other types of gas turbine different from the sequential combustion gas turbine.

Therefore, there is the need to further optimize the burner to better control the combustion operation and the emissions of a gas turbine in order to meet the environmental regulations and extend the service operational intervals.

One of the standard approaches is to make the outer surface of the fuel lance by an alloy with less hardness than the SEV burner for reconditioning purpose and/or adding a hardface coating on the lance; these approaches are expensive and time consuming for repair.

US patent no. 7937950 describes a fastening structure of rail-like design for fastening a fuel lance in an SEV burner of a sequential combustion gas turbine.

This solution is not particularly efficient because leakages may happen due to the fact that the collar can lift from its position and because possible wear between the carrier plate and the collar due to sliding forces can occur.

US2007/227157A1 discloses a device for fastening a second burner, SEV burner in short, in a sequentially operated gas turbine arrangement, in which a fuel/air mixture is burnt in a first burner so as to form hot gases which can subsequently be supplied, partly expanded, for a second combustion to the SEV burner which is designed essentially as a flow duct, with a flow duct wall, which has an orifice, through which a fuel supply can be introduced into the interior of the SEV burner, and on which are provided in the axial direction of the orifice, in each case opposite one another, two fastening structures, into which in each case a carrying structure for the further fastening of the SEV burner to an external carrier can be introduced.

Another disadvantage is that a plurality of different components with accurate tolerances are needed, increasing the production costs and decreasing the structural rigidity of the fastening structure.

### SUMMARY OF THE INVENTION

It is an aspect of the present invention to solve the aforementioned technical problems by providing a burner assembly for a gas turbine as defined in claims 1 and 2.

It is another aspect to provide a gas turbine as defined in claim 3.

It is a further aspect to provide a method for installing a fuel lance in a burner assembly as defined in claims 4 and 5.

According to an aspect of the invention, a burner assembly of a gas turbine comprises:
- a tubular body defining the flow path for the hot gas of the combustion during the turbine operation;
- an aperture for a fuel lance having an edge (4E);
- a wearing ring, of a sacrificial material, configured to correspond to the edge of the aperture;
- a contacting leg extending from the wearing ring along the tubular body;
- a pre-tension system configured to contact the contacting leg in order to provide a pre-tension force on the ring against the tubular body.

The sacrificial material of the ring is a material softer than the material of the surrounding components.

For example, the sacrificial material of the ring may be a material softer than the material of the fuel lance.

In an aspect, the ring is made in a single piece.

The pre-tension force of the present invention is able to avoid sliding, hammering and other types of wear, decreasing the vibrations and the leakages between the wearing ring and the tubular body of the burner assembly during the turbine operation; the overall robustness of the burner assembly is also improved.

The temperature in the burner is stably maintained to reduce leakages, thus enabling accurate control of the CO and NOx emissions and of the other combustion parameters.

Leakages due to creep or temperature deformations between the wearing ring and the fuel lance can be further decreased selecting a proper material for the wearing ring, thus increasing the service intervals and decreasing the servicing costs.

Additionally, when deformations happen on the ring, the ring can be easily and quickly replaced without the need of replacing the lance, decreasing the cost and the time for service operations.

The thermal loading of the wearing ring during the turbine operation increases the pre-tension force, which is beneficial in reducing vibration and wear.

Furthermore, in cold assembly state, the pre-tension force can be applied to overcome any possible load condition and creep of the lance or of the burner.

It is possible to choose the material of the burner independently by the material of the wearing ring or by the material of the Fuel lance.

The pre-tension system comprises a pre-tension block with a pre-tension surface arranged to contact the contacting leg in order to provide the pre-tension force.

The manufacturing tolerances between this pre-tension surface and the burner provide said pre-tension force on the leg.

No additional components are required, thus providing a high robustness of the burner assembly with low cost and low time for servicing.

The pre-tension system comprises a pre-tension component configured to contact the leg to provide the pre-tension force.

This pre-tension component can be easily replaced for service purpose, without the need to replace any other component.

The pre-tension component is a pre-tension bolt screwed into the pre-tension system. A locking element is also mounted into the pre-tension system and the pre-tension bolt comprises a shaped head able to engage with this locking element; the locking element is advantageously a bolt, a pin or a similar component.

In this way, the pre-tension bolt changes its relative position in respect to the locking element with counter-hole by turning, in order to allow a precise adjustment of the pre-tension force.

It is possible to avoid rotations of the bolt due to the temperature dilatations, maintaining a stable pre-tension force.

A re-adjustment of the pre-tension can be provided quickly and easily without replacing any component, decreasing the service costs.

In one embodiment, the burner assembly comprises two contacting legs extending from the ring in opposite directions and substantially parallel to the hot gas flow path; in this case, a pre-tension system is associated to each leg, as explained more in detail below.

A ring with two opposite contacting legs may allow the use of the existing elements already present on a standard burner.

However, it is not to be excluded to provide different numbers or different shape or directions of these contacting legs with an associated pre-tension system, even if the described solution appears to be the most cost effective and efficient one.

According to another aspect, a wearing ring is configured to correspond to the edge of an aperture of a burner assembly for a fuel lance; this ring being preferably made of a sacrificial material and comprising at least one contacting leg extending from the ring.

According to a further aspect, a gas turbine comprises a burner assembly as described above.

According to a further aspect, a method for installing a fuel lance in a burner assembly, is described below.

### BRIEF DESCRIPTION OF THE DRAWINGS

The aspects and other features of the present invention will become more apparent upon reading of the following non-restrictive description of preferred embodiments thereof, given for the purpose of exemplification only, with reference to the accompany drawings, through which similar reference numerals are used to refer to similar elements, and in which:
Figure 1 shows a sequential combustion gas turbine of the prior art;
Figure 2 shows a wearing ring according an embodiment of the present disclosure;
Figure 3 shows a burner assembly according a first embodiment of the disclosure;
Figure 4 shows a vertical cross-section of Fig.3 with a Fuel lance and a sensor;
Figure 5 shows a burner assembly according a second embodiment of the disclosure;
Figure 6 shows a burner assembly according a third embodiment of the disclosure;
Figure 7 shows an expanded view of a detail of Fig.6;
Figure 8 shows a cross-section according A-A of Fig.7;
Figure 9 shows a pre-tension bolt according the embodiment of Fig.6;
Figure 10 shows possible positions of the pre-tension bolt according the embodiment of Fig.6;
Figure 11 shows different embodiments of the pre-tension bolt.

Exemplary preferred embodiments will be now described with reference to the aforementioned drawings.

### DETAILED DESCRIPTION OF THE INVENTION

Fig.2 shows a wearing ring (15) according to the present embodiments.

The wearing ring (15) comprises two contacting legs (15A, 15B) extending in opposite directions protruding from a circular section (15C).

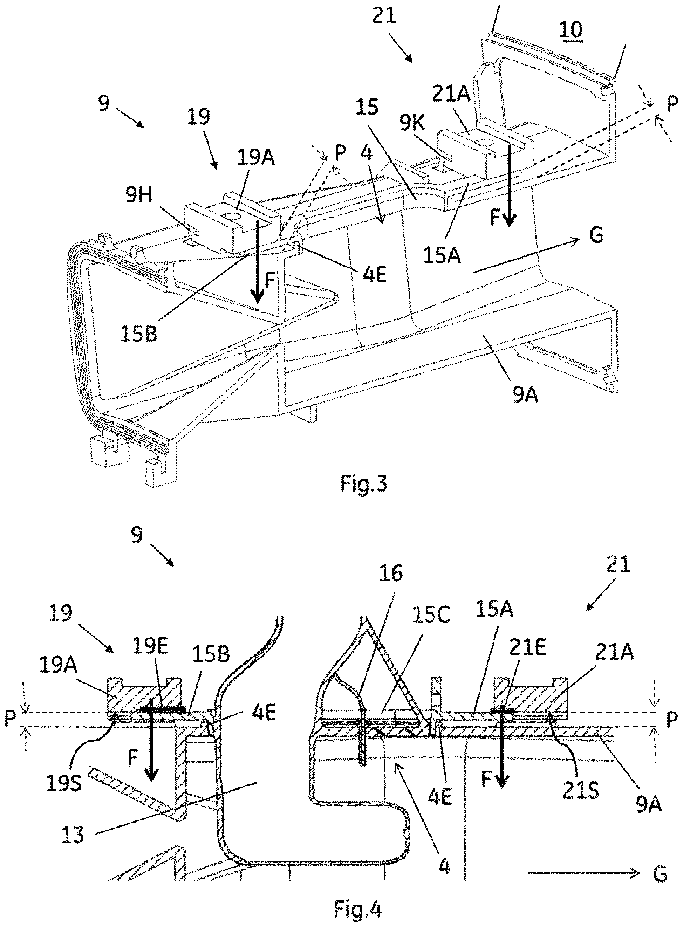

The circular section (15C) has a protruded rim (15D) and its geometry is configured to come into contact with the edge (4E) of an aperture (4) of a burner (9), see Figs.3 to 6.

The ring (15) is made preferably by a sacrificial alloy, such as a nickel-based alloy, such as HAYNES188.

A sacrificial alloy can be an alloy softer than the material of the surrounding components.

For example, the sacrificial alloy of the ring is softer than the alloy of the fuel lance, if the lance is made with alloy.

The legs (15A, 15B) can vary in number and position and are here represented only as one solution.

Fig.3 shows a burner assembly (9) comprising a tubular body (9A) defining the hot gas flow path (arrow G) in substantial axial direction.

The hot gas flow (G) enters the burner assembly (9) from the high pressure turbine (not shown) and exits from the burner assembly (9) entering in the combustion chamber (10).

The assembly (9) also comprises an aperture (4) inside which a fuel lance (not shown) can be placed. The assembly further comprises a pair of pre-tension systems (19; 21).

In an embodiment, each pre-tension system (19; 21) comprises a pre-tension block (19A; 21A) anchored on the tubular body (9A) in such a way as to form a gap (P) with the body (9A) itself.

Different anchoring means (9H; 9K) can be provided to associate the block (19A; 21A) to the tubular body (9A), for example bolts, pins or shaped fastenings.

These blocks (19A; 21A) are already included in the design of a standard burner; however, it is not to be excluded to provide blocks with different geometry or position according specific needs.

The circular section (15C) of the ring (15) is associated and corresponds to the aperture (4); its legs (15A, 15B) extending inside the respective gap (P) in a substantially parallel direction in respect to the hot gas flow path (G).

In another embodiment of the invention, the pre-tension block (19A; 21A) comprises a shim or a pills to contact the leg (15A, 15B).

Fig.4 shows a vertical cross-section of one of the blocks (19) of Fig.3.

Fig. 4 also shows a fuel lance (13) placed in the aperture (4) that is aligned with the hot gas flow path (G). A sensor (16) is place in proximity to the lance (13) to monitor the combustion conditions.

In an embodiment the sensor (16) is a thermocouple used to control the operation of the combustion of the engine.

The ring (15) is place on the aperture (4) so that its circular section (15C) comes into contact with a protruded edge (4E) of the aperture (4).

Clearances of some millimetres (not shown) may be provided between the fuel lance (13) and the ring (15) in order to allow an easy assembly.

Each pre-tension block (19A; 21A) comprises a pre-tension surface (19S; 21S) arranged so as to contact the leg (15A, 15B) and to provide the pre-tension force (F) on the leg (15A, 15B) in order to block the ring (15) on the edge (4E) of the aperture (4). The manufacturing tolerances between the pre-tension surface (19S; 21S) and the tubular body (9A) are adjusted for this purpose.

The gap (P) is therefore formed between the pre-tension surface (19S; 21S) and the tubular body (9A).

The pre-tension force (F) acts in a substantial radial direction in respect to a hot gas path (G).

In another embodiment, a first intermediate element (19E, 21E) is located between the block (19A; 21B) and the leg (15A, 15B). The first intermediate element (19E, 21E) may be configured as a hook, a holder, a seal, or a coating.

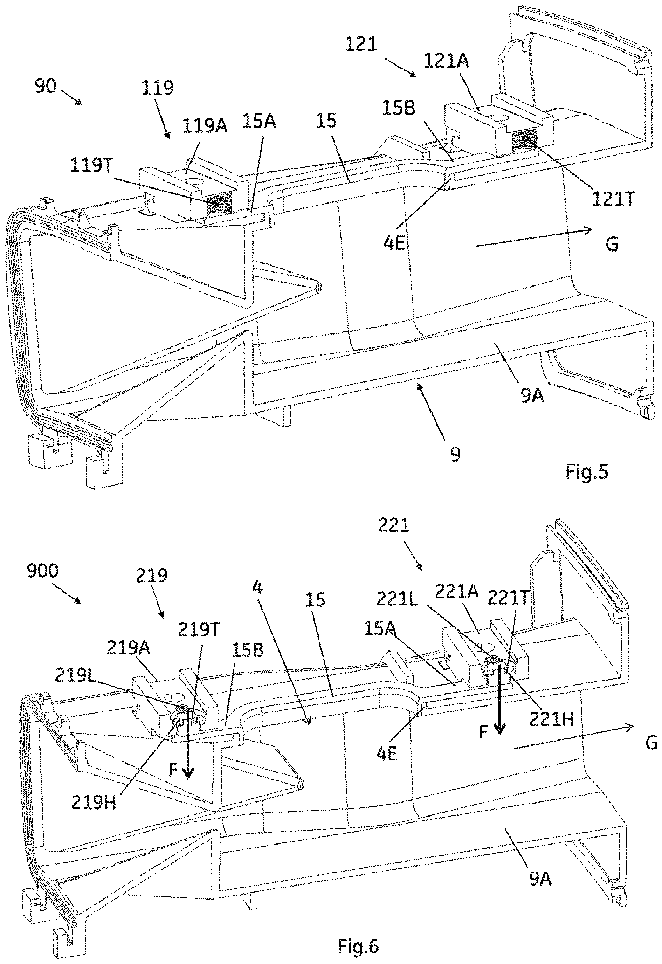

Fig.5 shows a burner assembly (90) comprising a couple of pre-tension systems (119; 121) that each comprise a pre-tension block (119A; 121A) similar to the blocks (19A; 21A), with a pre-tension element (119T; 121T) placed in a respective block (119A; 121A).

These pre-tension elements (119T; 121T) are in the form of springs or bellows and configured to contact the respective leg (15A, 15B) in order to adjust the pre-tension force (F).

In this way, the manufacturing tolerances of the gap (P) - as described in reference to Figs.3 and 4 - does not need to be adjusted.

Fig.6 shows a burner assembly (900) comprising a couple of pre-tension systems (219; 221), each of them further comprising a pre-tension block (219A; 221A) similar to the blocks (19A, 21A; 119A, 121A) of the previous embodiments, with the pre-tension element (119T; 121T) described in reference of Fig.5 now made by a pre-tension bolt (219T; 221T) screwed on the respective block (219A; 221A).

Each of these pre-tension bolts (219T; 221T) is configured to contact the respective leg (15A, 15B) in order to adjust the pre-tension force (F).

In this embodiment, the manufacturing tolerances of the gap (P) do not need to be very accurate.

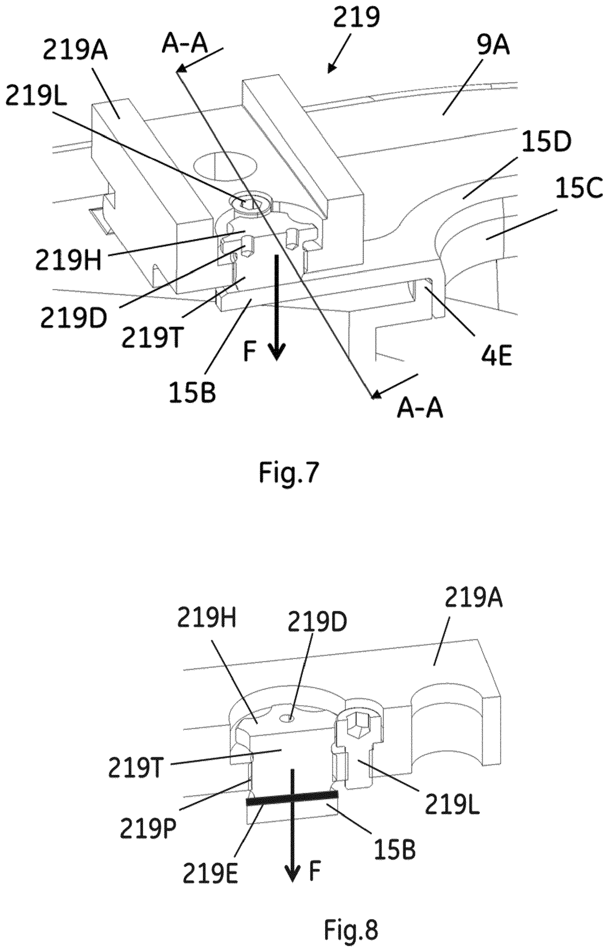

In an embodiment of the invention, a locking element (219L; 221L) is screwed into each of the pre-tension blocks (219A; 221A) and the bolt (219T; 221T) comprises shaped heads (219H; 221H) able to engage with the respective locking element (219L; 221L), see also Fig.7 and 8.

The locking element (219L; 221L) can be a bolt, a pin, a bolt with inner hex head or similar structure.

The bolt (219T; 221T) is able to change its relative position in respect to the locking element (219L; 221L) with the counter-hole by turning, in order to allow adjustment of the pre-tension force (F).

Fig.7 is a cross-section of the pre-tension block (219A) where it is possible to see, in particular, the bolt (219T) contacting and providing the pre-tension force (F) on the leg (15B) and, also, the protruded rim (15D) and the circular section (15C) contacting the edge (4E) of the aperture (4).

Fig.8 is a section according A-A of Fig.7 where it is possible to see, in particular, the shaped head (219H) engaging with the locking element (219L) screwed in the block (219A), in order to avoid the rotation of the bolt (219T) after installation or during operation; the bolt (219T) contacts and provides the pre-tension force (F) on the leg (15B).

In an embodiment, a second intermediate element (219E) is located between the bolt (219T; 221T) and the leg (15A, 15B), such as a wear resistant coating, a wear resistant shims, a pressure homogenizing joint such as a spherical joint or others.

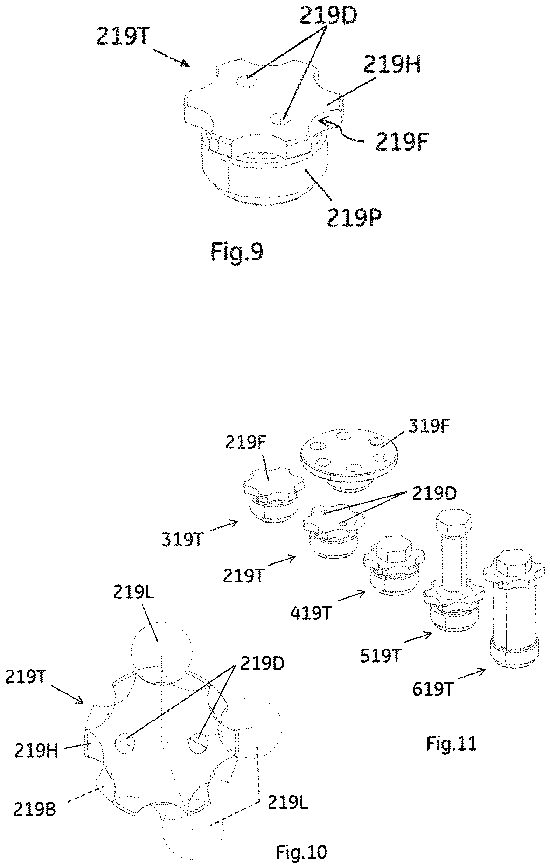

Fig.9 shows a view of the pre-tensioning bolt (219T) with a threaded portion (219P) and the shaped head (219H) comprising screwing elements (219D), for example double-holes for a pin-wrench or additional hex head or inner hexsocket or similar, to easily allow the screwing of the bolt (219T) into the block (219A).

In an embodiment shown in Fig.9, the shaped head (219H) comprises circular segments (219F) configured to match with the shape of the locking element (219L) in order to prevent the rotation of the bolt (219T).

Fig.10 shows a top view of the assembly composed by the bolt (219T) and the locking element (219L) in a locking position (solid line) and in additional two possible locking positions (dotted lines) provided over a circumference by a defined pitch-ratio between the locking element (219L) and shaped head (219H) in order to reduce the incremental step size of the adjustment, thus increasing the possible adjustment precision and regulating the pre-tension force (F) .

In Fig.11, the pre-tension bolt (219T) is shown according other possible alternatives (319T; 419T; 519T; 619T).

According another aspect, the present invention relates to a method for installing the fuel lance (13) in the burner assembly (9; 90; 900) comprising the steps as defined in claim 4.

Advantageously, the method further comprises:
- Adjusting the manufacturing tolerances between the pre-tension surface (19S; 21S) and the tubular body (9A) so as to contact and to provide the pre-tension force (F) on the leg (15A, 15B).

An additional step may include providing a plurality of locking positions of the locking element (219L; 221L) over a circumference around the shaped head (219H; 221H) in order to reduce the incremental step size of the adjustment, thus increasing the possible adjustment precision and regulating the pre-tension force (F).

While described in detail in connection with a sequential combustion gas turbine, embodiments may be applied to other types of gas turbine; the present invention being not limited to such sequential combustion gas turbine.

Additionally, only a limited number of embodiments have been described in the detailed description, it should be readily understood that the present invention is not limited to such disclosed embodiments. Additionally, while various embodiments have been described, it is to be understood that aspects may include only some of the described embodiments. Accordingly, the specification and claimed embodiments are not to be seen as limited by the foregoing description, but is only limited by the scope of the appended claims.

## Claims

1. A burner assembly (9; 90; 900) of a gas turbine comprising:
- a tubular body (9A) defining a flow path (G) for a hot gas of combustion during the turbine operation;
- an aperture (4) for a fuel lance (13) having an edge (4E) ;
- a wearing ring (15), of a sacrificial material, configured to correspond to the edge (4E) of the aperture (4) ;
- a contacting leg (15A, 15B) extending from the wearing ring (15) along said tubular body (9A);
- a pre-tension system (19, 21; 119, 121; 219, 221) configured to contact the contacting leg (15A, 15B) to provide a pre-tension force (F) on the ring (15) against the tubular body (9A),
wherein said pre-tension system (19; 21) comprises a pre-tension block (19A, 21A; 119A, 121A; 219A, 221A) anchored on said tubular body (9A) in such a way to form a gap (P) through which said contacting leg (15A, 15B) is positioned, wherein said pre-tension block (19A, 21A) comprises a pre-tension surface (19S; 21S) arranged to contact the contacting leg (15A; 15B) to provide said pre-tension force (F), and
wherein a first intermediate element (19E, 21E) is located between the pre-tension block (19A; 21B) and said contacting leg (15A, 15B),
wherein said pre-tension block (119A, 121A; 219A, 221A) comprises a pre-tension component (119T, 121T; 219T, 221T; 319T; 419T; 519T; 619T) configured to contact said contacting leg (15A, 15B) to provide said pre-tension force (F), and wherein said pre-tension component is a pre-tension bolt (219T, 221T; 319T; 419T; 519T; 619T) screwed into said pre-tension block (219A, 221A),
wherein a locking element (219L; 221L) is additionally mounted into said pre-tension block (219A, 221A); said pre-tension bolt (219T, 221T; 319T; 419T; 519T; 619T) comprising a shaped head (219H) able to engage with said locking element (219L; 221L).

2. The burner assembly (9; 90; 900) according to claim 1, where said wearing ring (15) comprises two contacting legs (15A, 15B) extending in opposite directions and substantially parallel to the hot gas flow path (G), and a pre-tension system (19, 21; 119, 121; 219, 221) for each of said extending legs (15A, 15B).

3. A gas turbine comprising a burner assembly (9; 90; 900) according to any of claims 1 to 2.

4. A method for installing a fuel lance (13) in a burner assembly (9; 90; 900) of a gas turbine comprising the following steps:
a) providing a tubular body (9A) of the burner assembly (9; 90; 900) defining a hot gas flow path (G) during the turbine operation;
b) providing an aperture (4) on the tubular body (9A) for positioning a fuel lance (13) in the hot gas flow path (G);
c) associating a wearing ring (15) of a sacrificial material to the edges (4E) of the aperture (4); said ring (15) comprising a contacting leg (15A; 15B) extending along the tubular body (9A);
d) associating a pre-tension system (19, 21; 119, 121; 219, 221) on the tubular body (9A); said system (19, 21; 119, 121; 219, 221) being configured to contact said contacting leg (15A; 15B) so as to provide a pre-tension force (F) on the ring (15); and
e) placing a fuel lance (13) inside said aperture (4) to lay on said wearing ring (15)
wherein said step d) further comprising:
- providing a pre-tension block (19A, 21A; 119A, 221A; 219A, 221A) having a pre-tension surface (19S; 21S) arranged to contact the at least one contacting leg (15A; 15B) in such a way to form a gap (P) with the tubular body (9A),
further comprising:
- providing a pre-tension element (119T, 121T; 219T, 221T) in the pre-tension block (119A; 121A) configured to contact the respective leg (15A; 15B) so as to adjust the pre-tension force (F),
wherein step d) further comprises:
- screwing a pre-tension bolt (219T; 221T), comprising a shaped head (219H; 221H), into the pre-tension block (219A; 221A) to provide a desired pre-tension force (F) on the contacting legs (15A; 15B);
- mounting a locking element (219L; 221L) into the pre-tension block (219A; 221A) and engage with the shaped head (219H; 221H) to prevent rotation of the bolt (219T; 221T).

5. The method according to claim 4, further comprising:
- adjusting the tolerances between the pre-tension surface (19S; 21S) and the tubular body (9A) to contact said leg (15A, 15B) and to provide the pre-tension force (F) on said leg (15A, 15B).

## Patentansprüche

1. Brenneranordnung (9; 90; 900) einer Gasturbine, umfassend:
- einen rohrförmigen Körper (9A), der einen Strömungspfad (G) für ein heißes Verbrennungsgas während des Turbinenbetriebs definiert;
- eine Öffnung (4) für eine Brennstofflanze (13) mit einer Kante (4E);
- einen Verschleißring (15) aus einem Opfermaterial, der so ausgestaltet ist, dass er der Kante (4E) der Öffnung (4) entspricht;
- einen Kontaktschenkel (15A, 15B), der sich von dem Verschleißring (15) entlang des rohrförmigen Körpers (9A) erstreckt;
- ein Vorspannsystem (19, 21; 119, 121; 219, 221), das dazu ausgestaltet ist, den Kontaktschenkel (15A, 15B) zu kontaktieren, um an dem Ring (15) eine Vorspannkraft (F) gegen den rohrförmigen Körper (9A) bereitzustellen,
wobei das Vorspannsystem (19; 21) einen Vorspannblock (19A, 21A; 119A, 121A; 219A, 221A) umfasst, der an dem rohrförmigen Körper (9A) in einer Weise verankert ist, dass ein Spalt (P) gebildet ist, durch den hindurch der Kontaktschenkel (15A, 15B) positioniert ist, wobei der Vorspannblock (19A, 21A) eine Vorspannoberfläche (19S; 21S) umfasst, die dazu angeordnet ist, den Kontaktschenkel (15A; 15B) zu kontaktieren, um die Vorspannkraft (F) bereitzustellen, und
wobei ein erstes Zwischenelement (19E, 12E) sich zwischen dem Vorspannblock (19A; 21B) und dem Kontaktschenkel (15A, 15B) befindet,
wobei der Vorspannblock (119A, 121A; 219A, 221A) eine Vorspannkomponente (119T, 121T; 219T, 221T; 319T; 419T; 519T; 619T) umfasst, die dazu ausgestaltet ist, den Kontaktschenkel (15A, 15B) zu kontaktieren, um die Vorspannkraft (F) bereitzustellen,
und wobei die Vorspannkomponente ein Vorspannbolzen (219T, 221T; 319T; 419T; 519T; 619T) ist, der in den Vorspannblock (219A, 221A) geschraubt ist,
wobei ein Verriegelungselement (219L; 221L) zusätzlich in dem Vorspannblock (219A, 221A) montiert ist; wobei der Vorspannbolzen (219T, 221T; 319T; 419T; 519T; 619T) einen geformten Kopf (219H) umfasst, der in der Lage ist, mit dem Verriegelungselement (219L; 221L) in Eingriff zu treten.

2. Brenneranordnung (9; 90; 900) nach Anspruch 1, wobei der Verschleißring (15) zwei Kontaktschenkel (15A, 15B), die sich in entgegengesetzte Richtungen und im Wesentlichen parallel zu dem Heißgasströmungspfad (G) erstrecken, und ein Vorspannsystem (19, 21; 119, 121; 219, 221) für jeden der sich erstreckenden Schenkel (15A, 15B) umfasst.

3. Gasturbine, umfassend eine Brenneranordnung (9; 90; 900) nach einem der Ansprüche 1 bis 2.

4. Verfahren zum Installieren einer Brennstofflanze (13) in einer Brenneranordnung (9; 90; 900) einer Gasturbine, umfassend die folgenden Schritte:
a) Bereitstellen eines rohrförmigen Körpers (9A) der Brenneranordnung (9; 90; 900), der während des Turbinenbetriebs einen Heißgasströmungspfad (G) definiert;
b) Bereitstellen einer Öffnung (4) an dem rohrförmigen Körper (9A) zum Positionieren einer Brennstofflanze (13) in dem Heißgasströmungspfad (G);
c) Zuordnen eines Verschleißringes (15) aus einem Opfermaterial zu den Kanten (4E) der Öffnung (4); wobei der Ring (15) einen Kontaktschenkel (15A; 15B) umfasst, der sich entlang des röhrenförmigen Körpers (9A) erstreckt;
d) Zuordnen eines Vorspannsystems (19, 21; 119, 121; 219, 221) an dem rohrförmigen Körper (9A); wobei das System (19, 21; 119, 121; 219, 221) dazu ausgestaltet ist, den Kontaktschenkel (15A; 15B) zu kontaktieren, um eine Vorspannkraft (F) an dem Ring (15) bereitzustellen; und
e) Anordnen einer Brennstofflanze (13) in der Öffnung (4), sodass sie auf dem Verschleißring (15) liegt;
wobei der Schritt d) ferner umfasst:
- Bereitstellen eines Vorspannblocks (19A, 21A; 119A, 221A; 219A, 221A) mit einer Vorspannoberfläche (19S; 21S), die dazu angeordnet ist, den mindestens einen Kontaktschenkel (15A; 15B) in einer Weise zu kontaktieren, dass ein Spalt (P) mit dem rohrförmigen Körper (9A) gebildet wird, ferner umfassend:
- Bereitstellen eines Vorspannelements (119T, 121T; 219T, 221T) in dem Vorspannblock (119A; 121A), das dazu ausgestaltet ist, den jeweiligen Schenkel (15A; 15B) zu kontaktieren, um die Vorspannkraft (F1) einzustellen,
wobei Schritt d) ferner umfasst:
- Einschrauben eines Vorspannbolzens (219T; 221T), der einen geformten Kopf (219H; 221H) umfasst, in den Vorspannblock (219A; 221A), um eine gewünschte Vorspannkraft (F) an den Kontaktschenkeln (15A; 15B) bereitzustellen;
- Montieren eines Verriegelungselements (219L; 221L) in den Vorspannblock (219A; 221A) und Eingreifenlassen mit dem geformten Kopf (219H; 221H), um eine Drehung des Bolzens (219T; 221T) zu verhindern.

5. Verfahren nach Anspruch 4, ferner umfassend:
- Einstellen der Toleranzen zwischen der Vorspannoberfläche (19S; 21S) und dem rohrförmigen Körper (9A) so, dass der Schenkel (15A, 15B) kontaktiert wird und die Vorspannkraft (F) an dem Schenkel (15A, 15B) bereitgestellt wird.

## Revendications

1. Ensemble de brûleur (9 ; 90 ; 900) d'une turbine à gaz comprenant :
- un corps tubulaire (9A) définissant un trajet d'écoulement (G) pour un gaz chaud de combustion pendant le fonctionnement de la turbine ;
- une ouverture (4) pour une lance à carburant (13) ayant un bord (4E) ;
- une bague d'usure (15), en un matériau sacrificiel, configurée pour correspondre au bord (4E) de l'ouverture (4) ;
- une patte de contact (15A, 15B) s'étendant à partir de la bague d'usure (15) le long dudit corps tubulaire (9A) ;
- un système de précontrainte (19, 21 ; 119, 121 ; 219, 221) configuré pour entrer en contact avec la patte de contact (15A, 15B) pour fournir une force de précontrainte (F) sur la bague (15) contre le corps tubulaire (9A),
dans lequel ledit système de précontrainte (19 ; 21) comprend un bloc de précontrainte (19A, 21A ; 119A, 121A ; 219A, 221A) ancré sur ledit corps tubulaire (9A) de manière à former un espace (P) à travers lequel ladite patte de contact (15A, 15B) est positionnée, dans lequel ledit bloc de précontrainte (19A, 21A) comprend une surface de précontrainte (19S ; 21S) disposée pour venir en contact avec la patte de contact (15A ; 15B) pour fournir ladite force de précontrainte (F), et
dans lequel un premier élément intermédiaire (19E, 21E) est situé entre le bloc de précontrainte (19A ; 21B) et ladite patte de contact (15A, 15B),
dans lequel ledit bloc de précontrainte (119A, 121A ; 219A, 221A) comprend un composant de précontrainte (119T, 121T ; 219T, 221T ; 319T ; 419T ; 519T ; 619T) configuré pour venir en contact avec ladite patte de contact (15A, 15B) pour fournir ladite force de précontrainte (F),
et dans lequel ledit composant de précontrainte est un boulon de précontrainte (219T, 221T ; 319T ; 419T ; 519T ; 619T) vissé dans ledit bloc de précontrainte (219A, 221A),
dans lequel un élément de verrouillage (219L ; 221L) est en outre monté dans ledit bloc de précontrainte (219A, 221A) ; ledit boulon de précontrainte (219T, 221T ; 319T ; 419T ; 519T ; 619T) comprenant une tête profilée (219H) apte à venir en prise avec ledit élément de verrouillage (219L ; 221L).

2. Ensemble de brûleur (9 ; 90 ; 900) selon la revendication 1, dans lequel ladite bague d'usure (15) comprend deux pattes de contact (15A, 15B) s'étendant dans des directions opposées et sensiblement parallèles au trajet d'écoulement de gaz chaud (G), et un système de précontrainte (19, 21 ; 119, 121 ; 219, 221) pour chacune desdites pattes d'extension (15A, 15B).

3. Turbine à gaz comprenant un ensemble de brûleur (9 ; 90 ; 900) selon l'une quelconque des revendications 1 à 2.

4. Procédé d'installation d'une lance à carburant (13) dans un ensemble de brûleur (9 ; 90 ; 900) d'une turbine à gaz comprenant les étapes suivantes :
a) fournir un corps tubulaire (9A) de l'ensemble de brûleur (9 ; 90 ; 900) définissant un trajet d'écoulement de gaz chaud (G) pendant le fonctionnement de la turbine ;
b) fournir une ouverture (4) sur le corps tubulaire (9A) pour positionner une lance à carburant (13) dans le trajet d'écoulement de gaz chaud (G) ;
c) associer une bague d'usure (15) d'un matériau sacrificiel sur les bords (4E) de l'ouverture (4) ; ladite bague (15) comprenant une patte de contact (15A ; 15B) s'étendant le long du corps tubulaire (9A) ;
d) associer un système de précontrainte (19, 21 ; 119, 121 ; 219, 221) sur le corps tubulaire (9A) ; ledit système (19, 21 ; 119, 121 ; 219, 221) étant configuré pour venir en contact avec ladite patte de contact (15A ; 15B) de manière à fournir une force de précontrainte (F) sur la bague (15) ; et
e) placer une lance à carburant (13) à l'intérieur de ladite ouverture (4) pour reposer sur ladite bague d'usure (15)
dans lequel ladite étape d) comprend en outre les étapes suivantes :
- fournir un bloc de précontrainte (19A, 21A ; 119A, 221A ; 219A, 221A) ayant une surface de précontrainte (19S ; 21S) agencée pour entrer en contact avec l'au moins une patte de contact (15A ; 15B) de manière à former un espace (P) avec le corps tubulaire (9A), comprenant en outre :
- la fourniture d'un élément de précontrainte (119T, 121T ; 219T, 221T) dans le bloc de précontrainte (119A ; 121A) configuré pour venir en contact avec la patte respective (15A ; 15B) de manière à ajuster la force de précontrainte (F),
Dans lequell' étape d) comprend en outre :
- le vissage d'un boulon de précontrainte (219T ; 221T), comprenant une tête profilée (219H ; 221H), dans le bloc de précontrainte (219A ; 221A) pour fournir une force de précontrainte (F) souhaitée sur les pattes de contact (15A ; 15B) ;
- le montage d'un élément de verrouillage (219L ; 221L) dans le bloc de précontrainte (219A ; 221A) et l'engagement avec la tête profilée (219H ; 221H) pour empêcher la rotation du boulon (219T ; 221T).

5. Procédé selon la revendication 4, comprenant en outre :
- l'ajustement des tolérances entre la surface de précontrainte (19S ; 21S) et le corps tubulaire (9A) pour entrer en contact avec ladite patte (15A, 15B) et pour fournir la force de précontrainte (F) sur ladite patte (15A, 15B).
